# EUROPEAN PATENT APPLICATION

(11) **EP 3 961 098 A1**
(43) Date of publication of application: **02.03.2022**
(21) Application number: 20193613.5
(22) Date of filing: 31.08.2020
(51) Int. Cl.: F23G 5/00

(54) **INCINERATION PLANT AND METHOD FOR OPERATING AN INCINERATION PLANT**

(71) Applicant: Technische Universität München, 80333 München (DE)
(72) Inventor: HERRMANN, Stephan, 81925 Munich (DE); SPLIETHOFF, Hartmut, 82140 Olching (DE)
(74) Representative: Hoefer & Partner Patentanwälte mbB

(57) **Abstract**

The present invention concerns a method for operating an incineration plant (10), especially a biomass or waste incineration plant, with a combustion chamber (11) and a steam boiler (21) for producing power, wherein the method includes supplying a fluid of the incineration plant (10) to a gas engine (50) coupled with the incineration plant (10) and/or supplying a fluid discharged by the gas engine (50) to the incineration plant (10) and/or heating and/or mixing a fluid supply and/or a fluid and/or a solid matter of the incineration plant (10) with at least one fluid discharged from or supplied to the gas engine (50). The present invention also concerns a power plant facility (1) including an incineration plant (10) and a gas engine (50).

## Description

The present invention concerns an incineration plant and a method for operating an incineration plant.

Conventionally, incineration plants which incinerate biofuels, fossil fuels, or waste are known. Due to the increase in demand for energy from renewable resources, production of electric power from solar and wind energy has also increased. The amount of power which can be supplied by these power sources, however, commonly fluctuates. In addition, the amount of power required by an electrical grid also commonly fluctuates. Thus, there exists a demand for power supplies for an electrical grid which can quickly and flexibly supply electric power to the electric grid during fluctuations of power demand. Conventional incineration plants on the other hand are commonly not capable of flexibly supplying the necessary electric power during short or spontaneous demand spikes or supply recessions, for instance when wind or solar energy are not available.

It is an object of the present invention to provide a power plant facility and a method for operating an incineration plant which provide increased flexibility as well as a higher degree of efficiency of electric power generation.

The solution of this object is achieved by the features of the independent claims. The dependent claims contain advantageous embodiments of the present invention.

The present invention concerns a method for operating an incineration plant, especially a biomass or waste incineration plant. The incineration plant includes a combustion chamber and a steam boiler for producing power. Herein, the method for operating the incineration plant includes a step of supplying a fluid of the incineration plant to a gas engine coupled with the incineration plant and/or supplying a fluid discharged by the gas engine to the incineration plant. In addition or alternatively thereto, a fluid supply and/or a fluid and/or a solid matter of the incineration plant may be heated and/or mixed with at least one fluid discharged from or supplied to the gas engine. In other words, the gas engine is coupled with the incineration plant such that fluids may be exchanged between them and/or employed to increase the efficiency and/or flexibility of the incineration plant and/or the gas engine.

The method for operating an incineration plant of the present invention has the advantage that the incineration plant can be coupled with the gas engine in order to increase flexibility of power supply and increase the efficiency thereof. In addition, existing incineration plants can be easily upgraded according to the method of the present invention.

Preferably, an exhaust gas of the gas engine and/or an engine coolant fluid of an engine cooling system of the gas engine and/or an oil of the gas engine may be employed as the fluid discharged by the gas engine. This has the advantage that the gas engine can be easily coupled with the incineration plant to thereby increase the flexibility and efficiency of the incineration plant and/or the gas engine.

Further preferably, the exhaust gas of the gas engine may be supplied to the combustion chamber of the incineration plant in order to be used at least partially as a fluid supply of the incineration plant. Therein, the exhaust gas of the gas engine may be supplied to the incineration plant as a primary air and/or a secondary air and/or a tertiary air supply of the incineration plant. This has the advantage that the exhaust gas of the gas engine may be used for pre-heating and/or at least partially replacing the primary, secondary, and/or tertiary air supplied to the incineration plant. Herein, the exhaust gas of the gas engine may entirely replace a fresh air supply as a primary, secondary, and/or tertiary air supply of the incineration plant. Alternatively, the exhaust gas of the gas engine may be mixed with a fresh air supply, wherein this mixture is used as a primary, secondary or tertiary air supply of the incineration plant.

Advantageously, heat from the exhaust gas of the gas engine and/or the engine coolant fluid and/or the oil of the gas engine may be transferred to fresh air via an air supply heat exchanger. Therein, this fresh air, which is heated by the heat from the exhaust gas, is further supplied to the combustion chamber of the incineration plant as a fluid supply of the incineration plant. Further, this heated fresh air may be supplied to the incineration plant as a primary, secondary, and/or tertiary air supply. This has the advantage that residual heat from the gas engine, for instance from the exhaust gas, the engine coolant fluid and/or the oil of the gas engine may be used to pre-heat an air supply to the incineration plant. Therefore, the efficiency of the incineration plant, especially the combined efficiency of the incineration plant and the gas engine, may be further increased.

Preferably, heat from the exhaust gas of the gas engine may be transferred to steam generated in the incineration plant as a fluid of the incineration plant via a superheating heat exchanger. Therein, the heat from the exhaust gas is used for superheating the steam generated in the incineration plant. Thereby, the temperature of the steam in the incineration plant is further increased, and the efficiency with which electric power is generated therefrom may also be further increased.

Further advantageously, heat from the exhaust gas of the gas engine may be transferred to feedwater as a fluid of the incineration plant. Therein, the feedwater is a water supply from which steam is generated in the incineration plant. The heat from the exhaust gas of the gas engine is transferred to the feedwater via a feedwater heat exchanger. With this, the feedwater of the incineration plant may be pre-heated by the feedwater heat exchanger via the exhaust gas of the gas engine, thereby further increasing the efficiency of the incineration plant, especially the combined efficiency of the incineration plant and the gas engine.

Preferably, heat from the engine coolant fluid of the gas engine and/or from the oil of the gas engine is transferred to an air mass of an air supply, which is a fluid supply of the incineration plant, and/or to a feedwater as the fluid of the incineration plant via a coolant heat exchanger. In other words, heat from the engine coolant fluid and/or from the oil of the gas engine may be transferred to a fluid supply of the incineration plant and/or to a fluid of the incineration plant via the coolant heat exchanger. This has the advantage that the excess heat from the gas engine which is transferred to the engine coolant fluid and/or to the oil of the gas engine may be further used for increasing the efficiency of the incineration plant.

Further advantageously, the engine coolant fluid of the gas engine may be supplied to a feedwater cycle of the incineration plant as feedwater for generating steam in the incineration plant. This has the advantage that the feedwater of the incineration plant can cool the gas engine and thereby be pre-heated, thus further increasing the efficiency with which steam is generated in the incineration plant.

Further preferably, combustion exhaust gas, especially flue gas, which is produced in the incineration plant and is a fluid of the incineration plant, may be supplied to the gas engine as combustion air and may especially be mixed with an intake air of the gas engine. That is, the combustion exhaust gas and/or flue gas of the incineration plant may be supplied to the gas engine directly or mixed with an intake air supply of the gas engine. This has the advantage that the production of nitrogen oxide in the gas engine may be reduced by supplying the combustion exhaust gas and/or flue gas with a lower oxygen content from the incineration plant to the gas engine.

Further advantageously, the gas engine may include a single-stage or multi-stage turbocharger, which is especially powered by the exhaust gas of the gas engine. Herein, an intake air of the gas engine is supplied to and compressed by the turbocharger. Further, a part of the intake air compressed by the turbocharger is further supplied to the incineration plant as the fluid discharged from the gas engine. Another part of the compressed intake air is supplied to the gas engine as combustion air. Thus, the turbocharger of the gas engine may supply compressed air to the incineration plant and/or the gas engine. This has the advantage that the incineration plant may be provided with compressed air by the turbocharger, for example for incineration in the incineration plant and/or for promoting circulation of air in the incineration plant.

Further preferably, the compressed intake air may be filtered by at least one membrane, by which the compressed intake air is divided into an oxygen-enriched part and an oxygen-reduced part. Therein, the oxygen-enriched part may especially be supplied to the incineration plant as the fluid discharged from the gas engine. Further, the oxygen-reduced part may especially be used as combustion air for the gas engine. Therein, the oxygen-reduced part of the compressed intake air has a lower oxygen concentration than the oxygen-enriched part of the compressed intake air. This has the advantage that the production of nitrogen oxide in the gas engine may be reduced and the efficiency of the incineration plant, especially the combined efficiency of the incineration plant and the gas engine, may be further increased.

Advantageously, natural gas may be supplied to a steam reformer in the incineration plant. Thereby, the natural gas is reformed by steam in the incineration plant, wherein the natural gas is reformed to synthesis gas and is especially further supplied to the gas engine for combustion. This has the advantage that heat from the steam and/or the combustion process in the incineration plant can be used to reform the natural gas supplied to the gas engine, which further increases the efficiency of combustion in the gas engine.

Further advantageously, the exhaust gas of the gas engine may be supplied directly, especially without nitrogen oxide exhaust gas treatment, to the incineration plant. Therein, the exhaust gas of the gas engine may be supplied directly, through the combustion chamber, to the steam boiler of the incineration plant before combustion gas treatment step in the incineration plant. This has the advantage that no nitrogen oxide exhaust gas treatment is necessary in the gas engine, since the nitrogen oxide treatment of the incineration plant may instead be used for the treatment of the exhaust gas of the gas engine. This has the advantage that the combined efficiency of the incineration plant and the gas engine may be advantageously increased. Further, costs may be saved by not including a dedicated nitrogen oxide exhaust gas treatment in the gas engine.

Further preferably, a grate firing of the incineration plant may be turned off and the exhaust gas of the gas engine may be supplied to the combustion chamber, especially through the combustion chamber to the steam boiler, of the incineration plant in order to generate steam in the incineration plant from feedwater as the fluid of the incineration plant. In other words, the incineration plant may be used for generating steam from excess heat of the exhaust gas of the gas engine, without further burning biomass or waste in the incineration plant. Alternatively, instead of turning off the grate firing of the incineration plant completely, the grate firing may be merely restricted or reduced, such that the steam generated in the incineration plant is generated by the grate firing of the incineration plant and the exhaust gas of the gas engine. This has the advantage that the combined efficiency of the incineration plant and the gas engine may be further increased. Further, since the gas engine can be employed flexibly, the combined flexibility of the incineration plant and the gas engine may be advantageously increased. Additionally, the gas engine exhaust gas may be used to pre-heat the combustion chamber during the start-up phase instead of using natural gas or heavy oil, which saves cost.

Preferably, the exhaust of the gas engine may be supplied to the incineration plant for pre-drying of a combustion fuel, which is a solid matter of the incineration plant. In other words, the exhaust gas of the gas engine may be used for drying the biomass or waste, which is incinerated in the incineration plant. This has the advantage that the exhaust gas, especially excess heat therefrom, may be advantageously employed to increase the efficiency of the incineration plant.

The present invention also concerns a power plant facility, which includes an incineration plant, especially a biomass or waste incineration plant. Therein, the incineration plant includes a combustion chamber and a steam boiler. Further, the power plant facility includes a gas engine which is coupled with the incineration plant. Therein, a fluid of the incineration plant is suppliable to the gas engine and/or a discharged fluid of the gas engine is suppliable to the incineration plant. In addition or alternatively thereto, a fluid discharged by or supplied to the gas engine is usable for mixing with and/or heating a fluid supply and/or a fluid and/or a solid matter of the incineration plant. That is, the power plant facility includes an incineration plant and a gas engine, which are coupled such that excess heat and/or fluids from the gas engine or the incineration plant may be selectively exchanged between the two in order to increase the overall efficiency and flexibility of the power plant facility.

Preferably, the fluid discharged by the gas engine is an exhaust gas and/or an engine coolant fluid and/or an oil of the gas engine. This has the advantage that excess heat discharged by the gas engine, by the exhaust gas and/or an engine coolant fluid and/or an oil of the gas engine may be further employed to increase the overall efficiency of the power plant facility.

Further preferably, the power plant facility may further include at least one exhaust gas line which is connected to the gas engine and a primary air port and/or a secondary air port and/or a tertiary air port of the incineration plant. Therein, the at least one exhaust gas line is configured to supply at least a part of the exhaust gas of the gas engine to the combustion chamber of the incineration plant as a fluid supply. This has the advantage that exhaust gas from the gas engine may further be employed to increase the efficiency of the incineration plant, especially the overall efficiency of the power plant facility.

In a preferred configuration, the power plant facility may further include at least one air supply heat exchanger between the gas engine and the incineration plant. Therein, the air supply heat exchanger is configured to transfer heat from the exhaust gas and/or from the engine coolant fluid and/or from the oil of the gas engine to an air mass supplied to the incineration plant as the fluid supply of the incineration plant. The air mass supplied to the incineration plant may especially be a primary air and/or a secondary air and/or a tertiary air supply to the incineration plant. This has the advantage that excess heat from the gas engine, especially the exhaust gas and/or engine coolant fluid and/or oil of the gas engine, may be used for pre-heating a fluid supply of the incineration plant. Thereby, the efficiency of the power plant facility is further advantageously increased.

Preferably, the power plant facility may further include at least one superheater heat exchanger. The superheater heat exchanger may especially be disposed in the steam boiler and/or in the combustion chamber of the incineration plant. Therein, the superheater heat exchanger is configured to transfer heat from the exhaust gas of the gas engine to steam generated in the steam boiler. Therein, the steam generated in the steam boiler is a fluid of the incineration plant and is heated, especially superheated, by the exhaust gas of the gas engine. This has the advantage that the steam of the incineration plant may be superheated by excess heat from the gas engine, whereby the electric power generation in the power plant facility may be carried out more efficiently.

Further advantageously, the power plant facility may include at least one feedwater heat exchanger between the gas engine and the steam boiler of the incineration plant. Therein, the feedwater heat exchanger is configured to transfer heat from the exhaust gas and/or the engine coolant fluid and/or the oil of the gas engine to the feedwater of the steam boiler, which is a fluid of the incineration plant. The feedwater of the steam boiler is a fluid of the incineration plant with which the steam boiler generates steam. With this, excess heat from the gas engine may be used to pre-heat the feedwater of the steam boiler, thereby further increasing the efficiency of the power plant facility.

Further advantageously, a feedwater cycle of the steam boiler of the incineration plant may be connected to a motor coolant fluid cycle of the gas engine. Thereby, a feedwater of the steam boiler, which is a fluid of the incineration plant and with which the steam boiler generates steam, is mixed with and/or used as the motor coolant fluid of the gas engine. In other words, the feedwater cycle of the steam boiler of the incineration plant may be coupled with the motor coolant fluid cycle of the gas engine. This has the advantage that excess heat from the gas engine, which is transferred to the motor coolant fluid, may be used for pre-heating the feedwater of the steam boiler of the incineration plant. Thereby, the efficiency of the power plant facility is further increased.

Preferably, an intake air supply of the gas engine may be connected with the combustion gas discharge of the incineration plant. Thereby, combustion gas generated in the incineration plant, which is a fluid of the incineration plant, is supplied to and especially further combusted in the gas engine. This has the advantage that the generation of nitrogen oxide in the gas engine may be reduced advantageously.

In a preferred embodiment, the gas engine of the power plant facility may include a single-stage or multi-stage turbocharger which is configured to be driven especially by the exhaust gas of the gas engine. Alternatively or additionally thereto, the turbocharger may be driven by the combustion gas or flue gas of the incineration plant. Further, the turbocharger is configured to compress an intake air of the gas engine. Herein, the power plant facility further includes a turbocharger-line which is connected to the turbocharger and a primary air port and/or a secondary air port and/or a tertiary air port of the incineration plant. The turbocharger-line is further configured to supply a part of the air compressed by the turbocharger as a fluid supply of the incineration plant to the combustion chamber and/or the steam boiler of the incineration plant. In this case, the part of the compressed air not supplied to the incineration plant is further supplied to the gas engine for combustion. This has the advantage that the turbocharger of the gas engine may additionally supply compressed air to the incineration plant, whereby the efficiency of the power plant facility is further increased.

Advantageously, the power plant facility may further include a membrane disposed between the turbocharger of the gas engine and the turbocharger-line. Therein, the membrane is configured to divide the compressed air from the turbocharger into oxygen-enriched air and oxygen-reduced air. Further, the oxygen-enriched air is supplied to the turbocharger-line and the oxygen-reduced air, which has a lower oxygen concentration than the oxygen-enriched air is supplied to the gas engine for combustion. This further has the advantage that oxygen-enriched air from the turbocharger can be supplied to the incineration plant, whereas oxygen-reduced air is supplied to the gas engine for combustion. This also has the advantage that the generation of nitrogen oxide in the gas engine may be advantageously reduced.

In a preferred embodiment, the power plant facility may further include a steam reformer, especially located in the steam boiler and/or the combustion chamber of the incineration plant. Therein, the steam reformer is configured to reform natural gas to synthesis gas using heat from the steam and/or heat from the combustion process in the incineration plant. This has the advantage that synthesis gas may be generated in the incineration plant from natural gas. The synthesis gas can then be advantageously supplied to the gas engine for combustion. Thereby, heat energy from the steam and/or the combustion is stored in the synthesis gas as combustible chemical energy. Thus, the efficiency of the power plant facility may be further increased.

Preferably, the power plant facility may further include an exhaust heat steam generator that is coupled to the gas engine such that at least a part of the exhaust gas of the gas engine is supplied to the exhaust heat steam generator. Therein, the exhaust heat steam generator is configured to generate steam using heat from the exhaust gas of the gas engine. Thus, exhaust heat from the gas engine may be further advantageously used to generate steam and thereby generate electric power in the power plant facility. This further increases the efficiency of the power plant facility.

Advantageously, the gas engine is connected to an electric power generator, which generates electric power from the combustion in the gas engine.

The steam boiler of the incineration plant especially denotes components of the incineration plant which are used for generating steam from heat in the combustion chamber. In other words, parts of the steam boiler are arranged partially or entirely in the combustion chamber of the incineration plant.

The steam boiler advantageously constitutes a feedwater cycle, wherein the feedwater is further processed and cleansed, especially chemically, in order to attain high efficiency and low corrosion of turbines used for electric power generation from the steam.

Further details, advantages and features of the preferred embodiments of the present invention are described in detail with reference to the figures. Therein:
Fig. 1 shows a schematic diagram of a power plant facility of a first embodiment of the present invention,
Fig. 2 shows a schematic diagram of a power plant facility of a second embodiment of the present invention,
Fig. 3 shows a schematic diagram of a power plant facility of a third embodiment of the present invention,
Fig. 4 shows a schematic diagram of a power plant facility of a fourth embodiment of the present invention,
Fig. 5 shows a schematic diagram of a power plant facility of a fifth embodiment of the present invention,
Fig. 6 shows a schematic diagram of a power plant facility of a sixth embodiment of the present invention,
Fig. 7 shows a schematic diagram of a power plant facility of an seventh embodiment of the present invention,
Fig. 8 shows a schematic diagram of a power plant facility of an eighth embodiment of the present invention,
Fig. 9 shows a schematic diagram of a power plant facility of a ninth embodiment of the present invention,
Fig. 10 shows a schematic diagram of a power plant facility of a tenth embodiment of the present invention,
Fig. 11 shows a schematic diagram of a power plant facility of an eleventh embodiment of the present invention,
Fig. 12 shows a schematic diagram of a power plant facility of a twelfth embodiment of the present invention, and
Fig. 13 shows a schematic diagram of a power plant facility according to an exemplary combination of the aforementioned embodiments of the present invention.

In the following explanations and drawings, functionally similar or equal features and elements have the same reference numerals and a repeated explanation of these may be omitted.

In addition, supply lines for supplying fluids shown in the following figures, which are represented by dotted lines, correspond to selective features. Therein, the dotted supply lines may be omitted entirely or the flow of fluid through these may be shut off. Additionally or alternatively thereto, a flow of fluid in any of the shown supply lines may be regulated selectively, for instance via inclusion and operation of regulating valves.

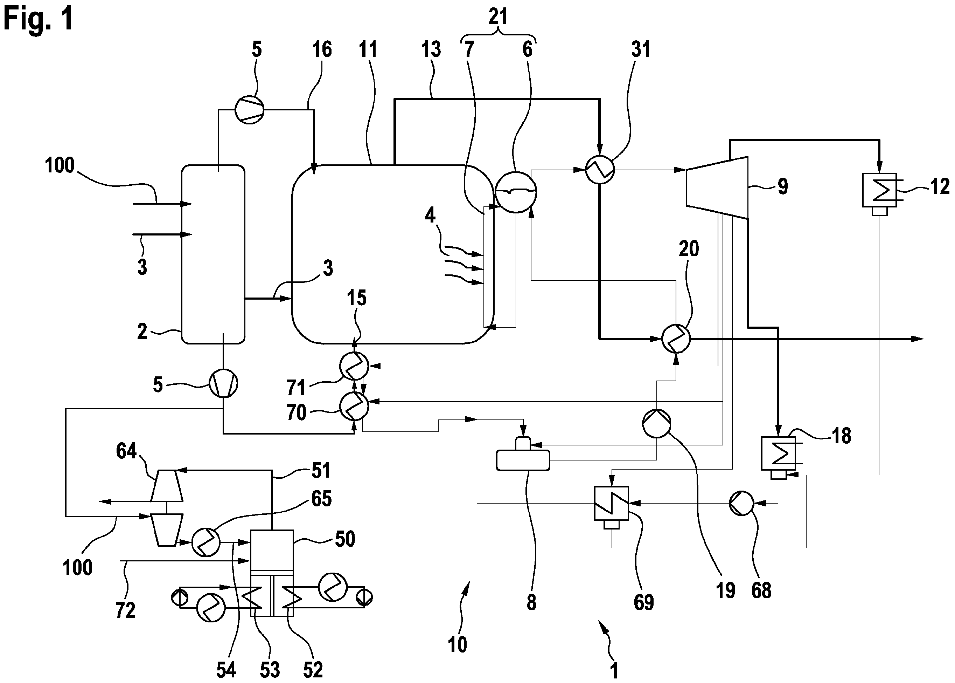

Fig. 1 shows a schematic diagram of a power plant facility 1 according to a first embodiment of the present invention. The power plant facility 1 includes an incineration plant 10 and a gas engine 50 which is coupled to the incineration plant 10. The gas engine 50 produces electric power by burning natural gas, synthesis gas, or bio gas. Herein and in the following, the incineration plant 10 is a waste incineration plant which generates electricity via the incineration of fuel, in this example the incineration of waste 3.

The incineration plant 10 comprises a waste bunker 2, in which the waste 3 is stored. The waste 3 is transported to a grate (not shown) in a combustion chamber 11 of the incineration plant 10. The waste 3 is incinerated on the grate. Thereby, heat 4 and flue gas 13 are generated in the combustion chamber 11. The incineration plant 10 further comprises a circulation evaporator 7, which circulates water in the combustion chamber 11, especially along the inner walls of the combustion chamber 11. This circulated water is then heated by the heat 4 from the combustion chamber 11 and steam is produced thereby. A mixture of this generated steam and the water circulated in the circulation evaporator 7 is stored in a steam drum 6.

The steam in the steam drum 6 is then further supplied to a turbine 9 for generating electricity. In general, the components of the incineration plant 10, especially the circulation evaporator 7 and the steam drum 6, which produce and/or store steam may be described collectively as a steam boiler 21. In order to further increase the efficiency of electric power generation in the turbine 9, the steam from the steam drum 6 is additionally superheated via a superheater heat exchanger 31. Therein, the superheater heat exchanger 31 exchanges heat between the flue gas 13 and the steam from the steam drum 6, thereby superheating said steam with excess heat of the flue gas 13.

Further, a share of the steam generated from the heat 4 of the incineration plant 10 may be extracted from the turbine 9 and directed to a district heating port 12 which provides district heating from condensing the steam following the turbine 9.

In addition, the rest of the steam from the turbine 9 is condensed in a condenser 18. Therein, the excess steam from the turbine 9 is condensed back to feedwater used for the generation of steam. The condensed feedwater is then further supplied to a condensate pump 68, which pumps the condensed feedwater into a condensate preheater 69. The condensate preheater 69 uses bleed steam from the turbine 9 to preheat the feedwater coming from the condenser 18 and further supplies the preheated feedwater to a feedwater tank 8.

The feedwater tank 8 is further connected to a feedwater pump 19, which pumps the feedwater from the feedwater tank 8 into an economizer 20 (feedwater pre-heating heat exchanger). The economizer 20 exchanges heat between the feedwater and the flue gas 13, commonly also referred to as "smoke gas" at this stage of the incineration plant 10, from the combustion chamber 11. Thereby, the economizer 20 preheats the feedwater via excess heat from the flue gas 13.

This preheated feedwater is then pumped into the steam drum 6, thus completing a feedwater cycle of the incineration plant 10.

For the combustion of the waste 3 in the combustion chamber 11, air is introduced into the combustion chamber 11 via a primary air port 15 and/or a secondary air port 16. Therein, fresh air 100, which is commonly taken from the waste bunker 2, is blown into the combustion chamber 11 via a fan 5. The primary air port 15 supplies this air 100 to the grate (not shown) in the combustion chamber 11 for the combustion of waste 3. Further, the secondary air port 16 supplies air 100 to the combustion chamber 11, commonly further upwards in the combustion chamber 11 from the grate, in order to promote complete incineration of the waste 3 and waste flue gases as well as promoting circulation of heat 4 in the combustion chamber 11.

In addition, the incineration plant 10 includes heat exchangers 70, 71, which exchange heat between the air 100 introduced into the primary air port 15 and condensing bleed steam from the turbine 9. Thereby, the air 100 entered into the primary air port 15 may be preheated by the heat exchangers 70, 71.

In this example, the pressure of the steam entering the turbine 9 is roughly 40 bar. The steam entering the district heating port 12 is at a pressure of roughly 1 to 5 bar. The excess steam entering the condenser 18 from the turbine 9 has a pressure of about 0.1 bar. The pressure of the steam entering the condensate preheater 69 is roughly 1 bar, wherein the feedwater from the condenser 18, supplied via the condensate pump 68 to the condensate preheater 69 has a temperature of roughly 50°C. After being preheated by the condensate preheater 69, the temperature of the water entering the feedwater tank 8 is at roughly 95°C. Further, the pressure of the steam entering the heat exchanger 70 is at roughly 4 bar, wherein the heat exchanger 70 raises the temperature of the air 100 supplied by the fan 5 from roughly 20°C to 120°C. The heat exchanger 71 is supplied with steam from the steam turbine 9 at a pressure of roughly 10 bar, wherein the heat exchanger 71 further raises the temperature of the air 100 supplied to the primary air port 15 to roughly 150°C.

The gas engine 50 includes an air supply 54. Fuel gas, for example natural gas, is supplied to the gas engine 50 via the fuel supply 72. The gas engine 50 further includes an engine cooler 52 and an oil cooler 53. The engine cooler 52 and the oil cooler 53 are connected to a pump and a heat exchanger, respectively, for cooling of an engine cooling fluid and an oil of the gas engine 50.

The gas engine 50 further includes a turbocharger 64. In this example, the turbocharger 64 is a single-stage turbocharger 64. Alternatively, the turbocharger 64 may also be a multi-stage turbocharger. Herein, the turbocharger 64 is driven by an exhaust gas 51 of the gas engine 50 and compresses the intake air 54 of the gas engine 50. Further, the turbocharger 64 compresses air 100 taken from the waste bunker 2 and supplied to the turbocharger via the fan 5. Therefore, in this exemplary embodiment, the gas engine 50 is coupled to the incineration plant 10 via its air supply 54, which is taken from the waste bunker 2 of the incineration plant 10. The air 100 compressed by the turbocharger 64 is cooled in an intercooler 65 of the gas engine 50.

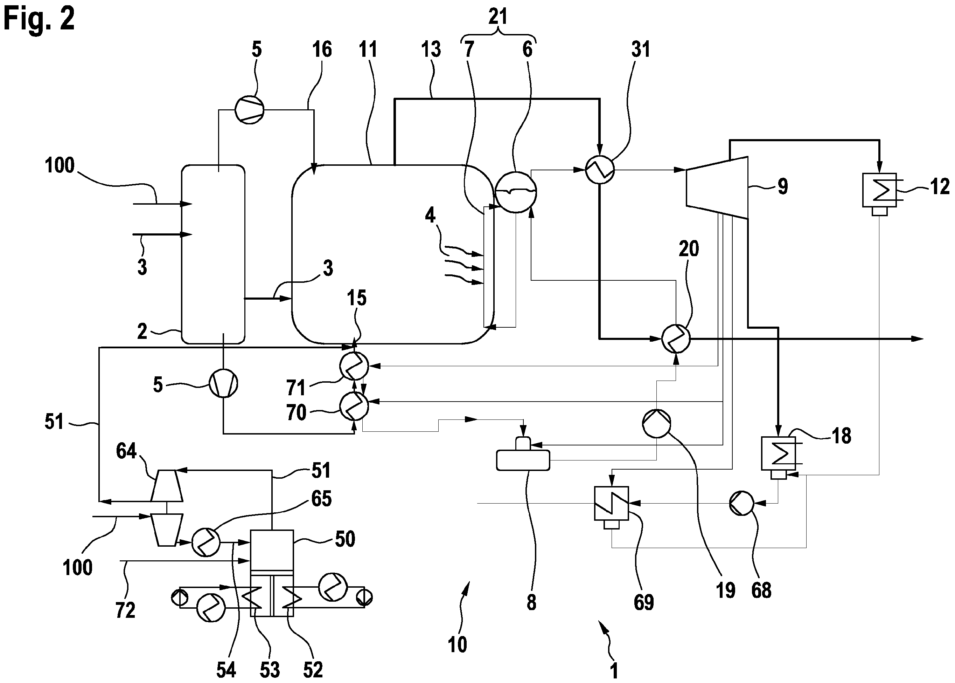

Fig. 2 shows a schematic diagram of a power plant facility 1 of a second embodiment of the present invention.

Herein, excess exhaust gas 51 from the gas engine 50 is supplied to the primary air port 15 of the incineration plant 10 after passing through the turbocharger 64. Since the excess exhaust gas 51 coming from the turbocharger 64 has a high temperature, for example roughly 400°C, the incineration of the waste 3 in the combustion chamber 11 of the incineration plant 10 can thereby be made more efficient, especially accelerated.

Further herein, the exhaust gas 51 of the gas engine 50 may be either mixed with the fresh air supply 100 before being supplied to the primary air port 15, or it may replace the fresh air supply 100 to the primary air port 15 entirely. Thus, the exhaust gas 51 of the gas engine 50 can be used to optimize a temperature and/or composition characteristics, such as oxygen and nitrogen levels, of the flue gas 13 in the combustion chamber 11 of the incineration plant 10. In addition, the exhaust gas 51 of the gas engine 50 can promote complete incineration of the waste 3 in the combustion chamber 11.

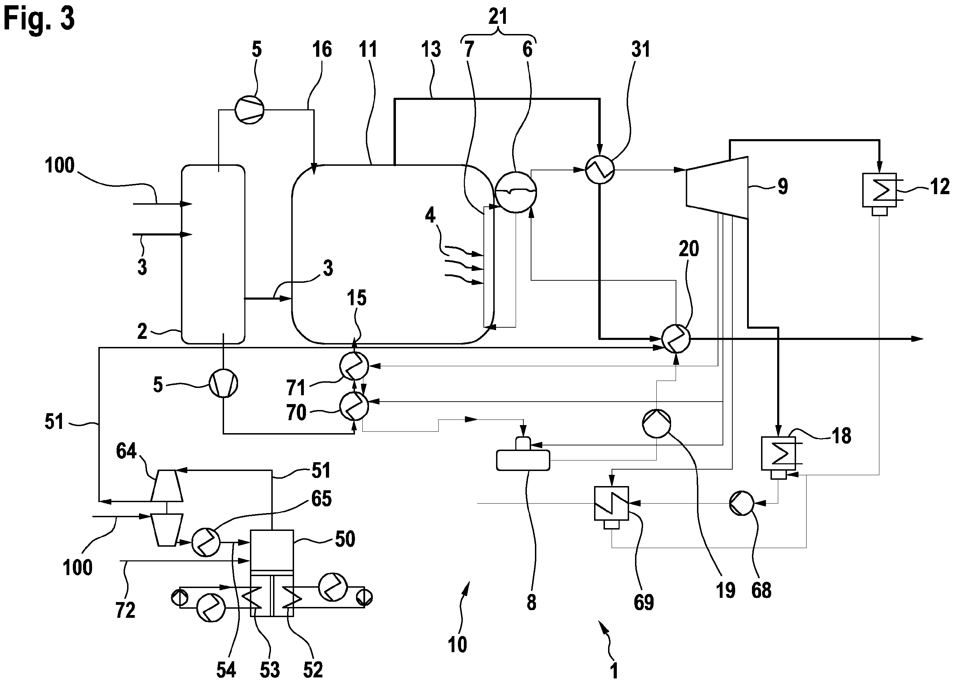

Fig. 3 shows a schematic diagram of a power plant facility 1 of a third embodiment of the present invention.

Herein, the exhaust gas 51 of the gas engine 50, which is used to drive the turbocharger 64, is further supplied to the economizer 20. This has the advantage that the excess heat from the exhaust gas 51 of the gas engine 50 may be used to further preheat the feedwater of the incineration plant 10, before entering the steam drum 6. Thereby, the generation of steam and power in the incineration plant 10 can be made more efficient via the excess heat from the exhaust gas 51 of the gas engine 50.

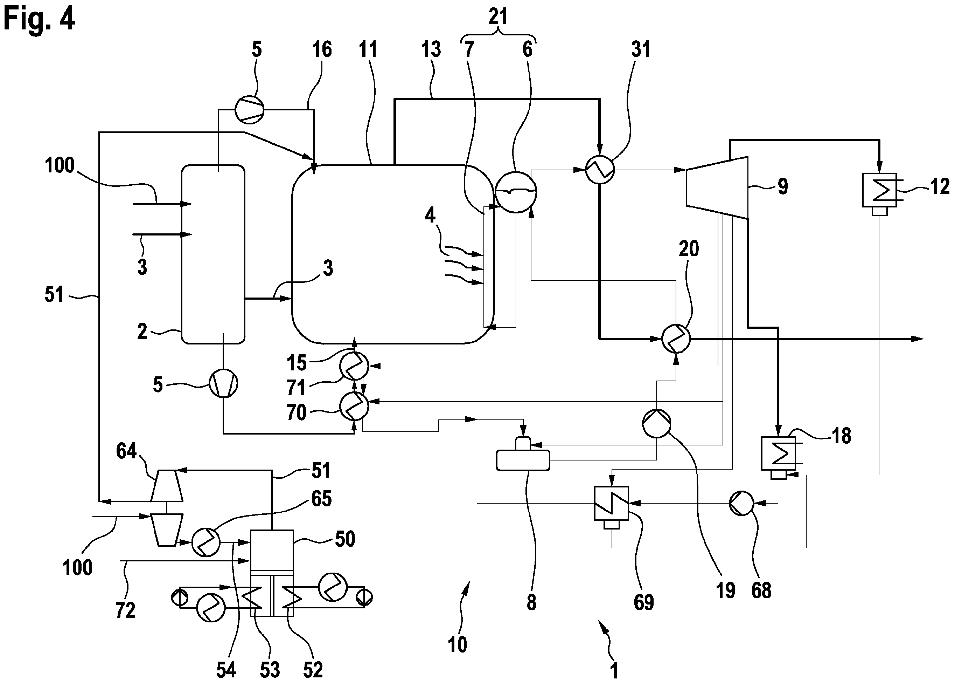

Fig. 4 shows a schematic diagram of a power plant facility 1 of a fourth embodiment of the present invention.

Herein, the exhaust gas 51, which is supplied to the turbocharger 64, is further supplied to the secondary air port 16 of the incineration plant 10. Therein, as explained with regard to the primary air port 15, the exhaust gas 51 of the gas engine 50 may be mixed with the air 100 supplied to the secondary air port 16, or replace the air 100 supplied to the secondary air port 16 entirely.

Thereby, complete combustion and incineration of the waste 3 as well as any particulates in the combustion chamber 11 may be promoted via the excess heat from the exhaust gas 51 of the gas engine 50.

In addition, the exhaust gas 51 of the gas engine 50 may be supplied to the fan 5 to thereby promote the circulation of the exhaust gas 51 in the combustion chamber 11.

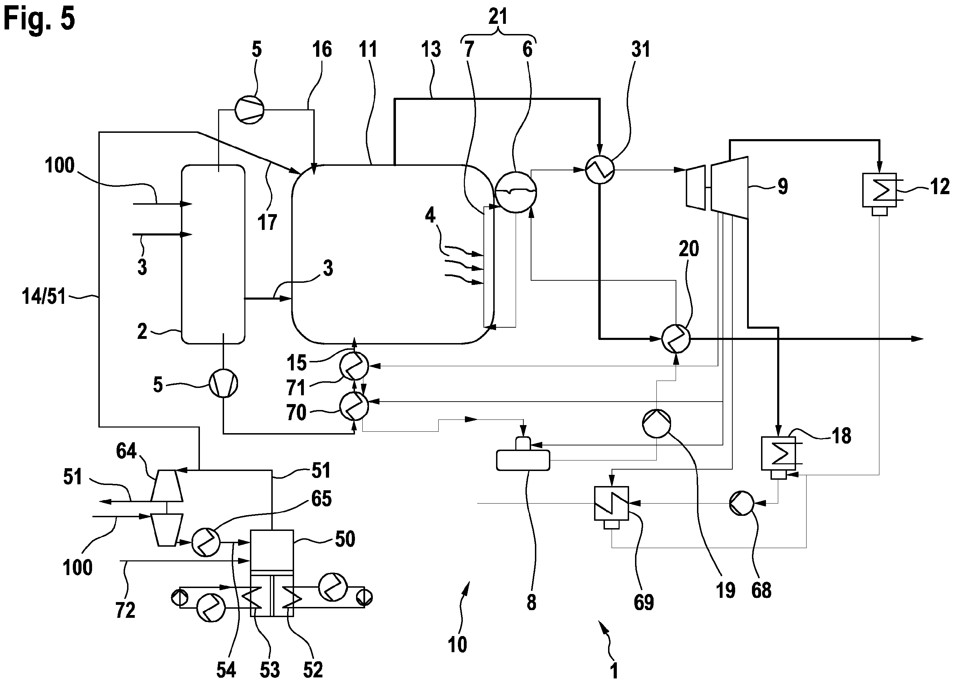

Fig. 5 shows a schematic diagram of a power plant facility 1 of a fifth embodiment of the present invention. Herein, the exhaust gas 51 of the gas engine 50 is supplied to the combustion chamber 11 via an exhaust gas line 14 before entering the turbocharger 64. Since the exhaust gas 51 is, in this example, supplied directly to the combustion chamber 11 from the gas engine 50, the exhaust gas 51 has a high pressure and temperature, which can be used to further promote complete incineration of the waste 3 in the combustion chamber 11. In this example, the exhaust gas 51 of the gas engine 50 has a pressure of roughly 3 bar and a temperature of 500°C.

Further, in this example, the exhaust gas 51 of the gas engine 50 is supplied to the combustion chamber 11 via a tertiary air port 17 in the combustion chamber 11. This has the advantage that the high pressure of the exhaust gas 51 can be used to promote circulation of flue gas 13 and heat 4 in the combustion chamber 11. Thereby, a more complete incineration of the waste 3 and the flue gas 13 in the combustion chamber 11 as well as any particulates can be achieved.

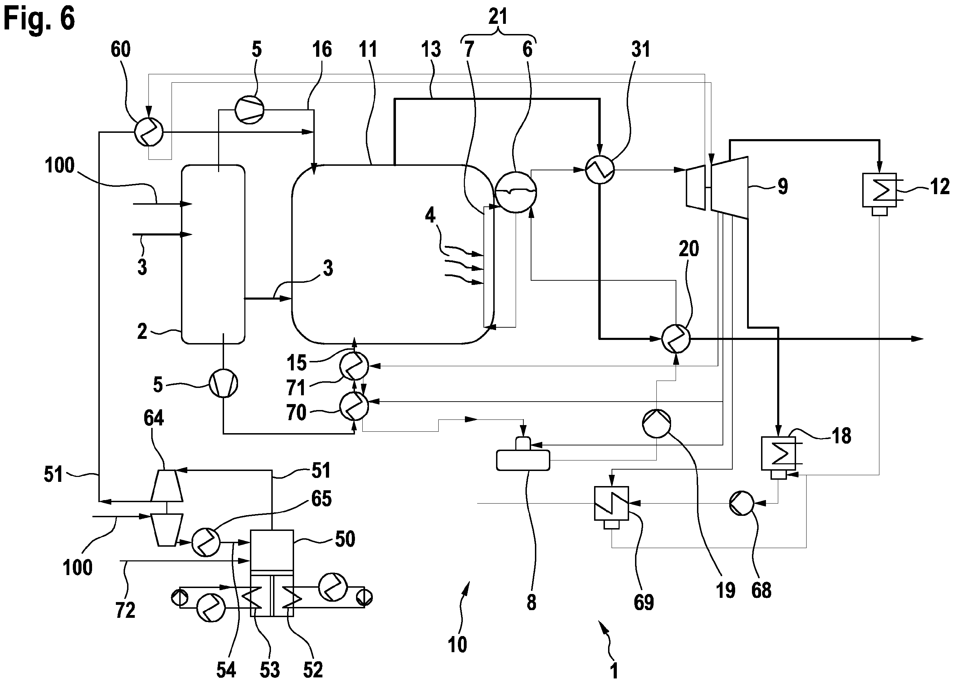

Fig. 6 shows a schematic diagram of a power plant facility 1 of a sixth embodiment of the present invention. Herein, the power plant facility 1 includes a further superheater heat exchanger 60. In addition, the turbine 9 of the incineration plant 10 is, in this example, a multi-stage turbine 9.

The superheater heat exchanger 60 exchanges heat from steam taken from the end of the first stage of the turbine 9 and the exhaust gas 51 of the gas engine 50. Thereby, the steam of the incineration plant 10 can be superheated between the multiple stages of the multi-stage turbine 9 thereof. With this, excess heat from the exhaust gas 51 of the gas engine 50 can be used to increase the efficiency at which the turbine 9 generates electricity from the steam of the incineration plant 10. With this additional re-heating step the pressure at the turbine inlet may be increased, because the steam quality at the outlet of the turbine 9 is increased. This increases the efficiency of the power plant.

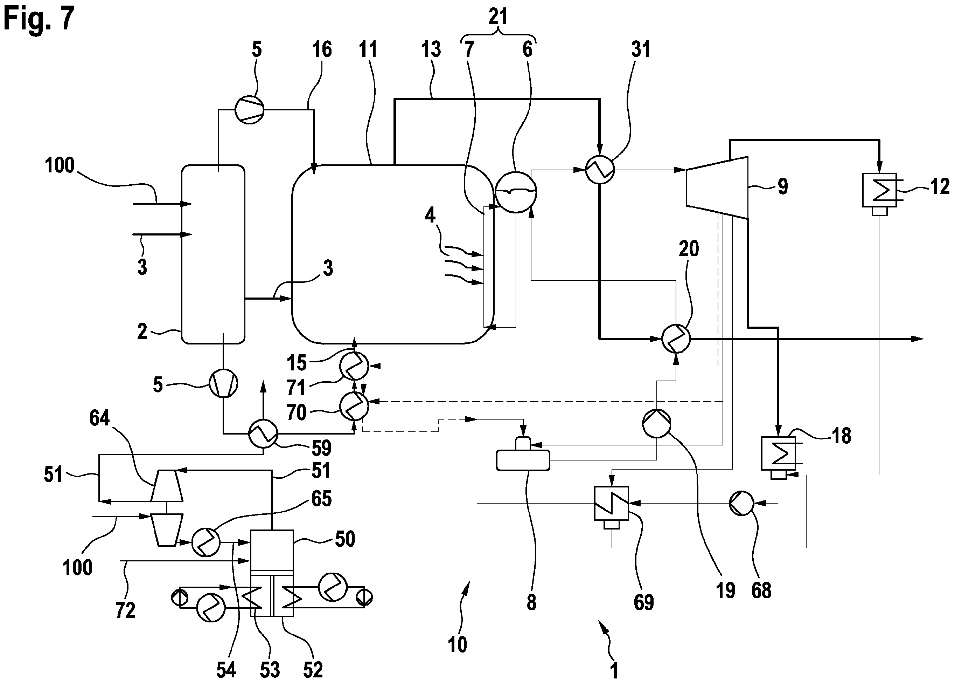

Fig. 7 shows a schematic diagram of a power plant facility 1 of a seventh embodiment of the present invention. Herein, the exhaust gas 51 of the gas engine 50 is supplied to an air supply heat exchanger 59. The air supply heat exchanger 59 exchanges heat between the exhaust gas 51 of the gas engine 50 and fresh air supplied to the primary air port 15 of the combustion chamber 11. Thereby, excess heat from the exhaust gas 51 can be used to preheat air 100 supplied to the combustion chamber 11, thus further promoting complete incineration of the waste 3 in the combustion chamber 11. This may lead to a reduction or omission of steam extraction for air pre-heating in the heat exchangers 70 and 71 and thus increase the efficiency.

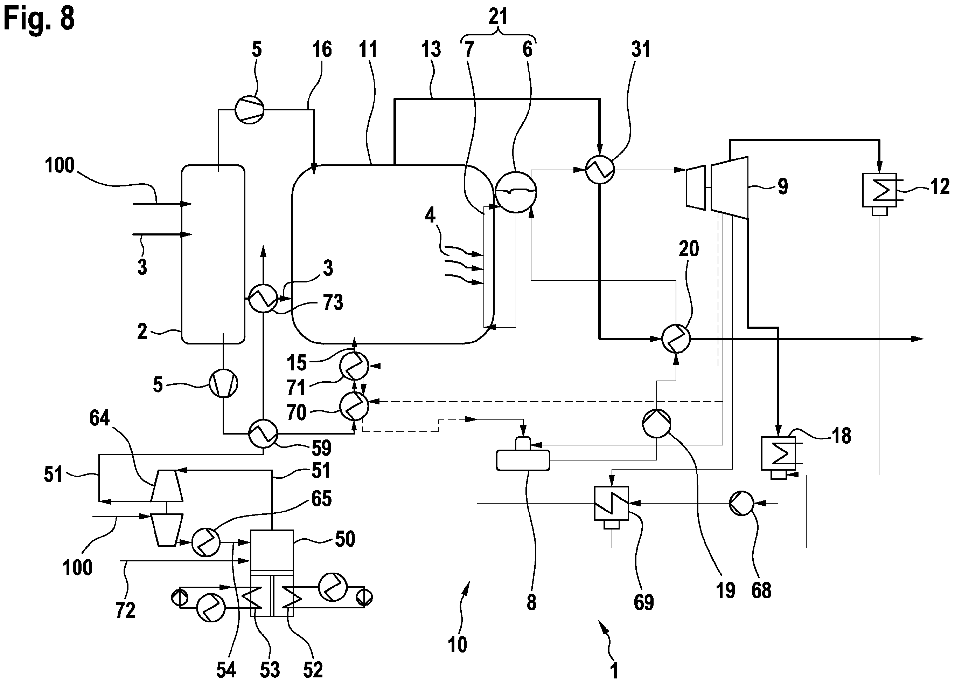

Fig. 8 shows a schematic diagram of a power plant facility 1 of an eighth embodiment of the present invention. Herein, the power plant facility 1 includes a waste preheating heat exchanger 73. The waste preheating heat exchanger 73 exchanges heat between the exhaust gas 51 of the gas engine 50 and the waste 3 supplied to the combustion chamber 11 of the incineration plant 10. Thereby, excess heat from the exhaust gas 51 of the gas engine 50 is used to preheat and dry the waste 3 before being incinerated in the combustion chamber 11. Thereby, complete incineration of the waste 3 can be promoted and the efficiency of the power plant facility 1 can be advantageously increased.

In addition or alternatively thereto, the exhaust gas 51 may be directly applied to the waste 3 in order to preheat and dry the waste 3.

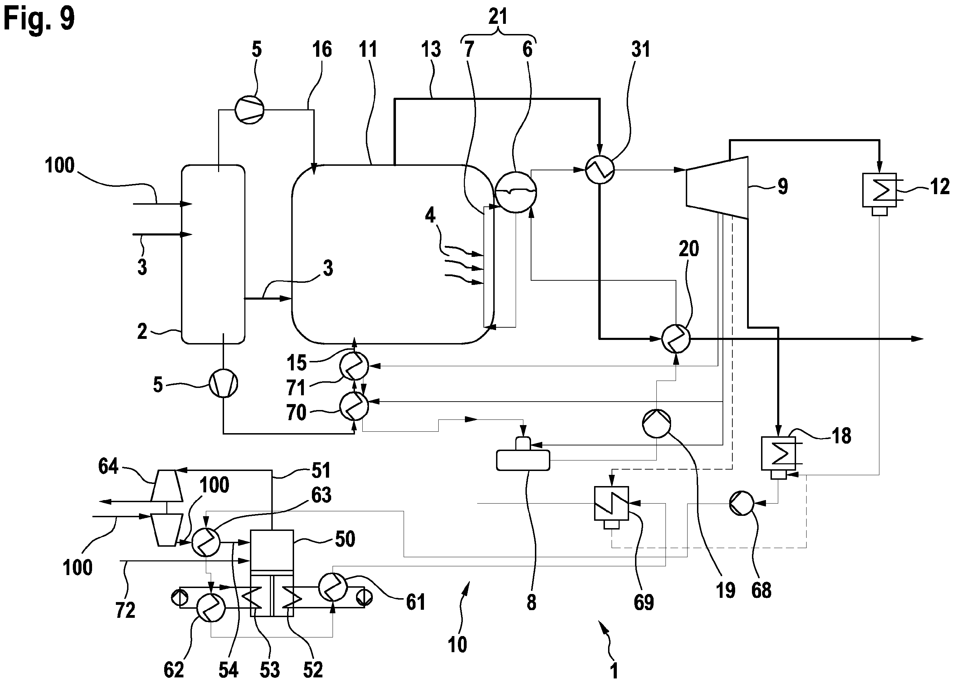

Fig. 9 shows a schematic diagram of a power plant facility 1 of a ninth embodiment of the present invention. Herein, excess heat from the gas engine 50, which is extracted by the engine cooler 52 and the oil cooler 53, respectively, is used to preheat the feedwater of the incineration plant 10.

More specifically, the condensate pump 68 is coupled to an oil cooler heat exchanger 62 (engine fluid heat exchanger), which exchanges heat between the oil of the gas engine 50 and a feed water of the incineration plant 10. Further, the feedwater of the incineration plant 10 passes through an engine cooler heat exchanger 61 (engine fluid heat exchanger), which exchanges heat between an engine coolant fluid and the feedwater of the incineration plant 10.

In addition, the feedwater cycle of the incineration plant 10 may be coupled to an air supply heat exchanger 63, which exchanges heat between the feed water of the incineration plant 10 and fresh air 100 supplied to the gas engine 50. Herein, the aforementioned intercooler 65 of the gas engine 50 may be used as the air supply heat exchanger 63.

With this, excess heat from the gas engine 50 can be used to preheat the feedwater of the incineration plant 10, thereby further increasing the efficiency thereof.

In addition or alternatively thereto, the feedwater cycle of the incineration plant 10 may be directly connected to the engine cooler 52 coolant fluid cycle. Thereby, the feedwater of the incineration plant 10 may be mixed with and/or used as the motor coolant fluid of the gas engine 50. Therein, the motor coolant fluid cycle of the gas engine 50 may be coupled to the feedwater cycle of the incineration plant 10 after the condenser 18 and the feedwater pump 19 and before further processing and cleaning steps for the feedwater of the incineration plant 10. These further processing and cleaning steps (not shown) may clean the feedwater of the incineration plant 10 before supplying it to the feedwater tank 8. Thus, any contaminants introduced for instance by the engine cooler 52 of the gas engine 50 into the feedwater cycle of the incineration plant 10 may be removed before said feedwater is transferred to the feedwater tank 8 for further generation of steam in the circulation evaporator 7.

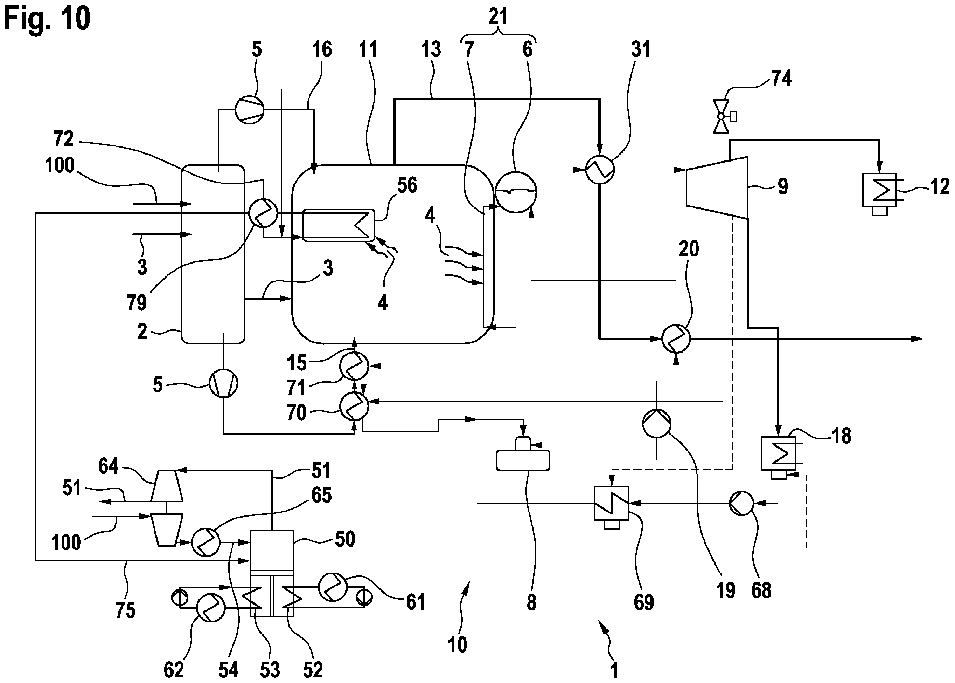

Fig. 10 shows a schematic diagram of a power plant facility 1 of a tenth embodiment of the present invention. Herein, the incineration plant 10 includes a steam reformer 56. The steam reformer 56 uses heat 4 in the combustion chamber 11 and bleed steam from the turbine 9 to reform natural gas 72, which is supplied to the steam reformer 56, into synthesis gas 75.

In addition, the incineration plant 10 may include a fuel gas heat exchanger 79, which exchanges heat between the natural gas 72 supplied to the steam reformer 56 and the synthesis gas 75 generated by the steam reformer 56. Thereby, the supplied natural gas 72 may be preheated and the synthesis gas 75 may be simultaneously cooled before being supplied to the gas engine 50. In addition, the incineration plant 10 further includes a flow control valve 74, which controllably supplies steam from the turbine 9 to the steam reformer 56.

Thereby, excess heat from the combustion chamber 11 and the steam from the turbine 9 can be used to reform natural gas 72 into synthesis gas 75. Thus, excess heat from the incineration plant 10 may be stored as chemical energy in the form of synthesis gas 75. The synthesis gas 75 is further supplied to the gas engine 50 for combustion therein, thereby increasing the overall efficiency of the power plant facility 1.

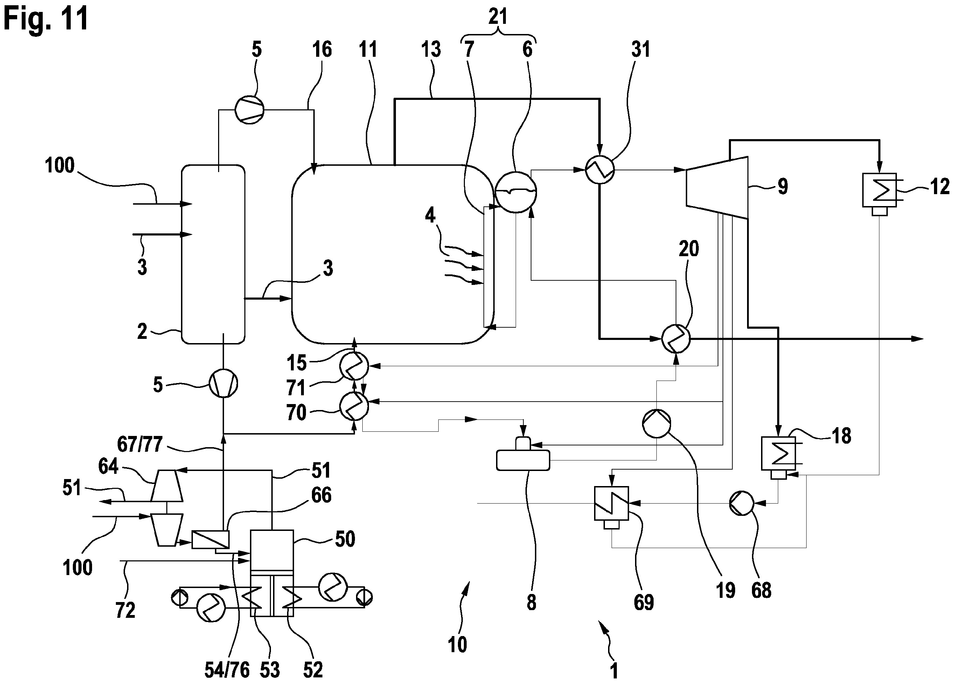

Fig. 11 shows a schematic diagram of a power plant facility 1 of an eleventh embodiment of the present invention. Herein, the power plant facility 1 includes a membrane 66 disposed between the turbocharger 64 and the gas engine 50. The membrane 66 is configured to divide the compressed air from the turbocharger 64 into oxygen-enriched air 77 and oxygen-reduced air 76. For example, the air supplied to the turbocharger 64 has an oxygen concentration of 21%. The oxygen-reduced air 76 has an oxygen concentration of 12 to 20%, whereas the oxygen-enriched air 77 has an oxygen concentration of 22 to 30%.

The oxygen-reduced air 76 is supplied to the gas engine 50 instead of or as a mixture with the fresh air 100 supplied to the gas engine 50 via the air supply 54. Further, the oxygen-enriched air 77 is supplied from the membrane 66 to the incineration plant 10, especially the primary air port 15 thereof, via a turbocharger-line 67. This has the advantage that combustion characteristics of the air supply to the gas engine 50 and the incineration plant 10, especially regarding combustion temperature and generation of nitrogen oxide, can be optimized. Further, in this example, the membrane 66 may replace the intercooler 65 of the turbocharger 64. On the other hand, depending on preferable temperature characteristics of the air supplied to be supplied to the gas engine 50, the membrane 66 may be disposed between the intercooler 65 and the gas engine 50, or between the turbocharger 64 and the intercooler 65.

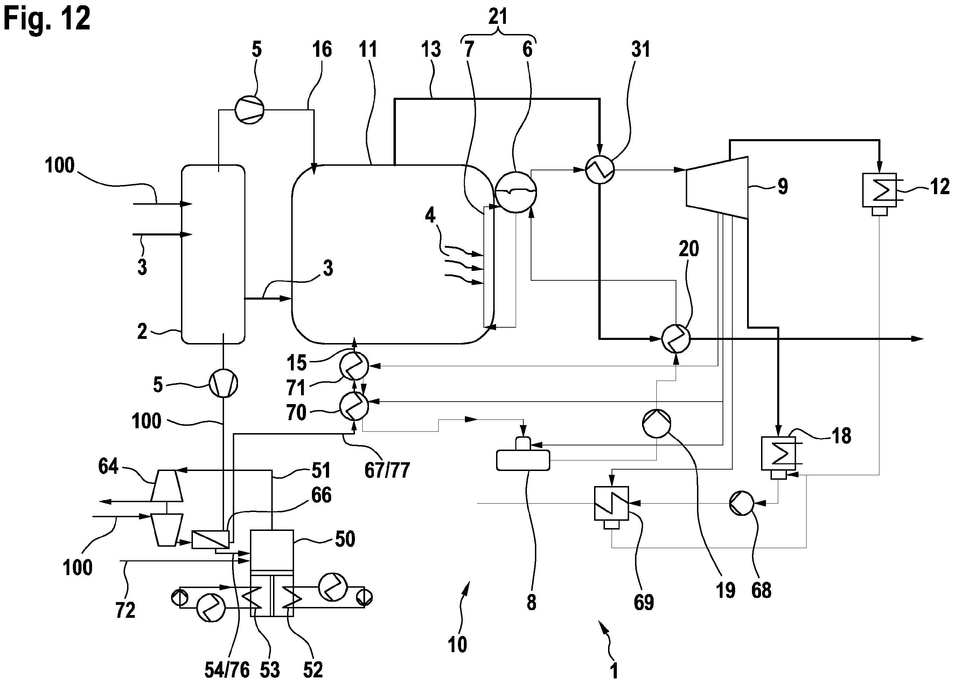

Fig. 12 shows a schematic diagram of a power plant facility 1 of a twelfth embodiment of the present invention. Herein, a permeate side of the membrane 66 is additionally supplied with fresh air 100 via the fan 5 in order to increase the oxygen partial pressure difference over the membrane 66 and thereby increase a separation rate or separation amount of oxygen in the membrane 66.

It is to be understood that the aforementioned exemplary embodiments of the present invention may be freely combined in order to further optimize the total efficiency of the power plant facility 1. In addition thereto, the flue gas 13 from the incineration plant 10 may be supplied to the gas engine 50, especially as the air supply 54 of the gas engine 50, or mixed with fresh air 100 as the air supply 54 of the gas engine 50 in order to further optimize combustion in the gas engine 50. Further, in case the exhaust gas 51 of the gas engine 50 is supplied to the combustion chamber 11 of the incineration plant 10, further nitrogen oxide emissions reduction means (not shown) in the gas engine 50 may be omitted, especially since the incineration plant 10 usually includes means for reducing an amount or concentration of nitrogen oxide in the flue gas 13.

In addition, if the exhaust gas 51 of the gas engine 50 is supplied to the combustion chamber 11 of the incineration plant 10, the incineration of waste 3 at the grate may be shut off partially or entirely. In this case, the heat from the exhaust gas 51 of the gas engine 50, which is supplied to the combustion chamber 11 of the incineration plant 10, can generate steam in the incineration plant 10. In other words, the power plant facility 1 may be operated as a combined cycle power plant.

Further, in this example, the membrane 66 may replace the intercooler 65 of the turbocharger 64.

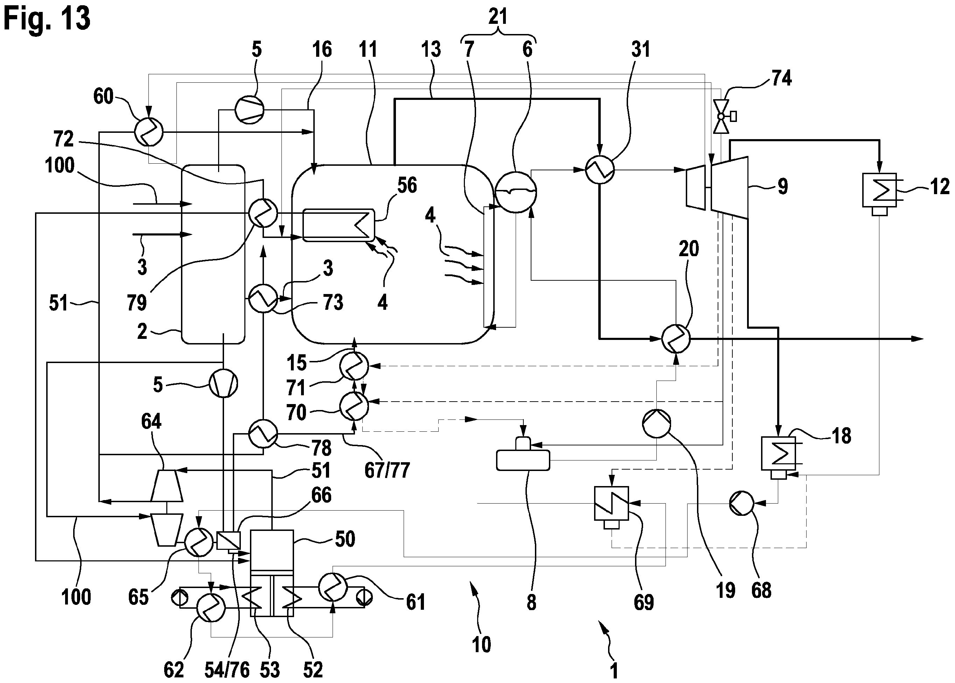

Fig. 13 shows a schematic diagram of a power plant facility 1 according to an exemplary combination of the foregoing embodiments of the present invention. As can be taken therefrom, the foregoing exemplary embodiments of the present invention may be combined in order to increase the overall efficiency of the power plant facility 1, and especially promote complete incineration of the waste 3 in the combustion chamber 11.

Further, as can be taken from Fig. 13, the power plant facility 1 thereof additionally includes an exhaust gas membrane heat exchanger 78, which exchanges heat between the exhaust gas 51 of the gas engine 50 and the oxygen-enriched air 77 from the membrane 66. Thereby, the oxygen-enriched air 77 from the membrane 66 can be preheated by excess heat from the exhaust gas 51 of the gas engine 50.

### List of Reference Numerals

- 1: power plant facility
- 2: waste bunker
- 3: waste
- 4: heat
- 5: fan
- 6: steam drum
- 7: circulation evaporator
- 8: feedwater tank
- 9: turbine
- 10: incineration plant
- 11: combustion chamber
- 12: district heating port
- 13: combustion gas/flue gas
- 14: gas engine exhaust gas line
- 15: primary air port
- 16: secondary air port
- 17: tertiary air port
- 18: condenser
- 19: feedwater pump
- 20: economizer (feedwater pre-heating heat exchanger)
- 21: steam boiler
- 31: superheater heat exchanger
- 50: gas engine
- 51: exhaust gas
- 52: engine cooler
- 53: oil cooler
- 54: air supply of gas engine
- 56: steam reformer
- 59: air supply heat exchanger
- 60: superheater heat exchanger
- 61: engine cooler heat exchanger
- 62: oil cooler heat exchanger
- 63: air supply heat exchanger
- 64: turbocharger
- 65: intercooler
- 66: membrane
- 67: turbocharger-line
- 68: condensate pump
- 69: condensate preheater
- 70: heat exchanger
- 71: heat exchanger
- 72: fuel supply/natural gas
- 73: waste preheating heat exchanger
- 74: flow control valve
- 75: synthesis gas
- 76: oxygen-reduced air
- 77: oxygen-enriched air
- 78: exhaust gas membrane heat exchanger
- 79: fuel gas heat exchanger
- 100: fresh air

## Claims

1. Method for operating an incineration plant (10), especially a biomass or waste incineration plant, with a combustion chamber (11) and a steam boiler (21) for producing power, **characterized by**:
• supplying a fluid of the incineration plant (10) to a gas engine (50) coupled with the incineration plant (10) and/or supplying a fluid discharged by the gas engine (50) to the incineration plant (10); and/or
• heating and/or mixing a fluid supply and/or a fluid and/or a solid matter of the incineration plant (10) with at least one fluid discharged from or supplied to the gas engine (50).

2. Method according to claim 1, wherein an exhaust gas (51) of the gas engine (50) and/or an engine coolant fluid of an engine cooling system (52) of the gas engine (50) and/or an oil of the gas engine (50) is used as the fluid discharged by the gas engine (50).

3. Method according to claim 2, wherein the exhaust gas (51) of the gas engine (50) is supplied to the combustion chamber (11) in order to be used at least partially as a fluid supply of the incineration plant (10) such as a primary air (15) and/or a secondary air (16) and/or a tertiary air supply (17) of the incineration plant (10).

4. Method according to claims 2 or 3, wherein heat from the exhaust gas (51) of the gas engine (50) and/or the engine coolant fluid and/or the oil of the gas engine (50) is transferred to fresh air via an air-supply heat exchanger (59), wherein the fresh air is supplied to the combustion chamber (11) of the incineration plant (10) as a fluid supply of the incineration plant (10) as a primary air (15) and/or secondary air (16) and/or tertiary (17) air supply.

5. Method according to any one of claims 2 to 4, wherein heat from the exhaust gas (51) of the gas engine (50) is transferred to steam generated in the incineration plant (10) as a fluid of the incineration plant (10) via a superheating heat exchanger (60) for superheating the steam and/or wherein heat from the exhaust gas (51) of the gas engine (50) is transferred to feedwater, with which steam is generated in the incineration plant (10), as a fluid of the incineration plant (10) via a feedwater pre-heating heat exchanger (20) for pre-heating the feedwater.

6. Method according to any one of claims 2 to 5, wherein heat from the engine coolant fluid of the gas engine (50) and/or from the oil of the gas engine (50) is transferred to an air mass of an air supply, which is a fluid supply of the incineration plant (10), and/or to a feedwater as the fluid of the incineration plant (10) via an engine fluid heat exchanger (61, 62) and/or wherein the engine coolant fluid of the gas engine (50) is supplied to a feedwater cycle of the incineration plant (10) as feedwater for generating steam in the incineration plant (10).

7. Method according to any one of claims 1 to 6, wherein combustion exhaust gas (13), especially flue gas, which is produced in the incineration plant (10) and is a fluid of the incineration plant (10), is supplied to the gas engine (50) as combustion air and is especially mixed with an intake air (54) of the gas engine (50).

8. Method according to any one of claims 1 to 7, wherein the gas engine (50) includes a single-stage or multi-stage turbocharger (64), which is especially powered by the exhaust gas (51) of the gas engine (50), and an intake air (54) of the gas engine (50) is supplied to and compressed by the turbocharger (64) and wherein a part of the compressed intake air is supplied to the incineration plant (10) as the fluid discharged from the gas engine (50) and another part of the compressed intake air is supplied to the gas engine (50) as combustion air, in particular, wherein the compressed intake air is filtered via at least one membrane (66), by which the compressed intake air is divided into an oxygen-enriched part, which is especially supplied to the incineration plant (10) as the fluid discharged from the gas engine (50), and an oxygen-reduced part, which is especially used as combustion air (54) for the gas engine (50), wherein the oxygen-reduced part of the compressed intake air has a lower oxygen concentration than the oxygen-enriched part of the compressed intake air.

9. Method according to any one of claims 1 to 8, wherein natural gas (72) is supplied to a steam reformer (56) in the incineration plant (10) and is reformed by steam in the incineration plant (10), wherein the natural gas (72) is reformed to synthesis gas (75) and wherein the synthesis gas is especially supplied to the gas engine (50) for combustion.

10. Method according to any one of claims 2 to 9, wherein the exhaust gas (51) of the gas engine (50) is supplied directly, especially without NOₓ exhaust gas treatment, to the incineration plant (10), especially through the combustion chamber (11) to the steam boiler (21), of the incineration plant (10) before a combustion gas treatment step in the incineration plant and/or wherein a grate (4) firing of the incineration plant (10) is at least partially turned off and the exhaust gas (51) of the gas engine (50) is supplied to the combustion chamber (11) of the incineration plant (10) in order to generate steam in the incineration plant (10) from feedwater as the fluid of the incineration plant (10), and/or wherein the exhaust gas (51) of the gas engine (50) is supplied to the incineration plant (10) for pre-drying and/or pre-heating of a combustion fuel (3), which is a solid matter of the incineration plant (10), or to a waste preheating heat exchanger (73) for pre-drying and/or pre-heating of the combustion fuel (3).

11. Power plant facility (1), including an incineration plant (10), especially a biomass or waste incineration plant, wherein
• the incineration plant (10) includes a combustion chamber (11) and a steam boiler (21), **characterized by**:
• a gas engine (50) which is coupled with the incineration plant (10) such that a fluid of the incineration plant (10) is suppliable to the gas engine (50) and/or a discharged fluid of the gas engine (50) is suppliable to the incineration plant (10) and/or a fluid discharged by or supplied to the gas engine (50) is usable for mixing with and/or heating a fluid supply and/or a fluid and/or a solid matter of the incineration plant (10).

12. Power plant facility (1) according to claim 11, wherein the fluid discharged by the gas engine (50) is an exhaust gas (51) and/or an engine coolant fluid and/or an oil of the gas engine (50).

13. Power plant facility (1) according to claims 11 or 12, further including at least one exhaust gas line (14) which is connected to the gas engine (50) and a primary air port (15) and/or a secondary air port (16) and/or a tertiary air port (17) of the incineration plant (10) and is configured to supply at least a part of the exhaust gas (51) of the gas engine (50) to the combustion chamber (11) of the incineration plant (10) as a fluid supply, and/or wherein an intake air supply (54) of the gas engine (50) is connected with a combustion gas (13) discharge of the incineration plant (10) such that combustion gas (13) generated in the incineration plant (10), which is a fluid of the incineration plant (10), is supplied to the gas engine (50).

14. Power plant facility (1) according to any one of claims 12 or 13, further including at least one air supply heat exchanger (59) between the gas engine (50) and the incineration plant (10), wherein the air supply heat exchanger (59) is configured to transfer heat from the exhaust gas (51) and/or from the engine coolant fluid and/or from the oil of the gas engine (50) to an air mass supplied to the incineration plant (10) as the fluid supply of the incineration plant (10), especially to a primary air (15) and/or a secondary air (16) and/or a tertiary (17) air supplied to the incineration plant (10).

15. Power plant facility (1) according to any one of claims 12 to 14, further including at least one superheater heat exchanger (60), especially in the steam boiler (21) and/or in the combustion chamber (11) of the incineration plant (10), wherein the superheater heat exchanger (60) is configured to transfer heat from the exhaust gas (51) of the gas engine (50) to steam generated in the steam boiler (21), which is a fluid of the incineration plant (10), in order to heat, especially superheat, the steam of the incineration plant (10).

16. Power plant facility (1) according to any one of claims 12 to 15, further including at least one feedwater heat exchanger (20, 61, 62) between the gas engine (50) and the steam boiler (21) of the incineration plant (10), wherein the feedwater heat exchanger (20, 61, 62) is configured to transfer heat from the exhaust gas (51) and/or the engine coolant fluid and/or the oil of the gas engine (50) to feedwater of the steam boiler (21), which is a fluid of the incineration plant (10) and with which the steam boiler (21) generates steam, and/or wherein a feedwater cycle of the steam boiler (21) of the incineration plant (10) is connected to a motor coolant (52) fluid cycle of the gas engine (50) such that a feedwater of the steam boiler (21), which is a fluid of the incineration plant (10) and with which the steam boiler (21) generates steam, is mixed with and/or used as the motor coolant fluid of the gas engine (50).

17. Power plant facility (1) according to any one of claims 11 to 16, wherein the gas engine (50) includes a single-stage or multi-stage turbocharger (64) which is configured to be driven, especially by the exhaust gas (51) of the gas engine (50), and to compress an intake air (54) of the gas engine (50), and wherein the power plant facility (1) includes a turbocharger-line (67) which is connected to the turbocharger (64) and a primary air port (15) and/or a secondary air port (16) and/or a tertiary air port (17) of the incineration plant (10) and is configured to supply a part of the air compressed by the turbocharger (54) as a fluid supply of the incineration plant (10) to the combustion chamber (11) and/or the steam boiler (21), in particular, further including a membrane (66) disposed between the turbocharger (64) of the gas engine (50) and the turbocharger-line (67), wherein the membrane (66) is configured to divide the compressed air from the turbocharger (64) into oxygen-enriched air (77), which is supplied to the turbocharger-line (67), and oxygen-reduced air (76), which has a lower oxygen concentration than the oxygen-enriched air (77) and is supplied to the gas engine (50) for combustion.

18. Power plant facility (1) according to any one of claims 11 to 17, further including a steam reformer (56), especially in the combustion chamber (11) of the incineration plant (10), wherein the steam reformer (56) is configured to reform natural gas (72) to synthesis gas (75) using heat (4) and/or steam from the incineration plant (10).

19. Power plant facility (1) according to any one of claims 12 to 18, further including an exhaust heat steam generator which is coupled to the gas engine (50) such that at least a part of the exhaust gas (51) of the gas engine (50) is supplied to the exhaust heat steam generator and wherein the exhaust heat steam generator is configured to generate steam using heat from the exhaust gas (51) of the gas engine (50).
